# EUROPEAN PATENT SPECIFICATION

(11) **EP 2 257 205 B1**
(45) Date of publication and mention of the grant of the patent: **29.06.2011**
(21) Application number: 09708069.1
(22) Date of filing: 03.02.2009
(51) Int. Cl.: A47J 31/40

(54) **SOLUBLE-MATERIAL CONTAINER FOR A BEVERAGE VENDING MACHINE**
BEHÄLTER FÜR LÖSLICHES MATERIAL FÜR EINE GETRÄNKEVERKAUFSMASCHINE
RÉSERVOIR DE MATIÈRES SOLUBLES POUR UN DISTRIBUTEUR DE BOISSONS

(30) Priority: 04.02.2008 IT TO20080083
(43) Date of publication of application: 08.12.2010
(73) Proprietor: N&W Global Vending S.p.A., 24030 Valbrembo (Bergamo) (IT)
(72) Inventor: SIRBU VILLA, Dan Alexie, 24040 Bonate Sotto (IT)
(74) Representative: Jorio, Paolo
(86) International application number: PCT/IB2009/000178
(87) International publication number: WO 2009/098563

(56) References cited:
- EP-A- 0 848 925
- EP-A- 1 176 402
- DE-U1- 8 807 818
- FR-A- 2 702 452
- US-A1- 2003 234 261

## Description

### TECHNICAL FIELD

The present invention relates to a soluble-material container for a beverage vending machine.

### BACKGROUND ART

In beverage, and particularly "instant" beverage, vending machines, containers are used to store soluble material, such as instant material or sugar. Each container normally comprises a tank; and a spout fitted to the container and connected to dispensing means housed inside the tank and powered by a motor to feed metered quantities of material to the spout.

The containers are normally mounted inside the machine so they can be removed and replaced manually by an operator to fill the tanks and clean the container housing easily.

The document EP-1176402 discloses a soluble material container for a beverage vending machine.

### DISCLOSURE OF INVENTION

It is an object of the present invention to provide a beverage vending machine soluble-material container that is cheap and easy to produce, and which at the same time permits fast, easy filling and cleaning by the operator.

According to the present invention, there is provided a soluble-material container for a beverage vending machine, as claimed in Claim 1 and, preferably, in any one of the following Claims depending directly or indirectly on Claim 1.

### BRIEF DESCRIPTION OF THE DRAWINGS

A non-limiting embodiment of the present invention will be described by way of example with reference to the accompanying drawings, in which:
Figures 1 and 2 show partial views in perspective, with parts removed for clarity, of a preferred embodiment of the container according to the present invention in respective different operating configurations;
Figure 3 shows a larger-scale axial section, with parts removed for clarity, of the Figure 1 and 2 container in the Figure 1 configuration;
Figure 4 shows a larger-scale axial section of the Figure 1 and 2 container in the Figure 2 configuration.

### BEST MODE FOR CARRYING OUT THE INVENTION

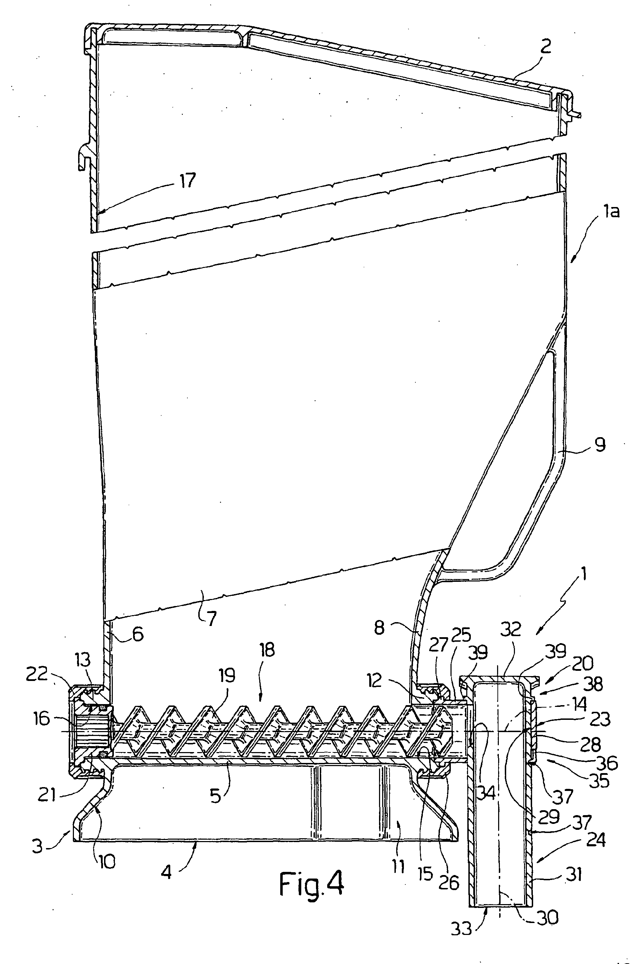

Number 1 in the accompanying drawings indicates as a whole a container comprising a tank 1a for housing soluble particulate material and closed at the top by a removable lid 2 (Figure 4) and at the bottom by a downward-facing cup-shaped base 3. Base 3 is bounded at the bottom by an edge 4 defining a stand by which to support container 1 on a flat support not shown, and at the top by a horizontal wall 5 defining the bottom of tank 1a.

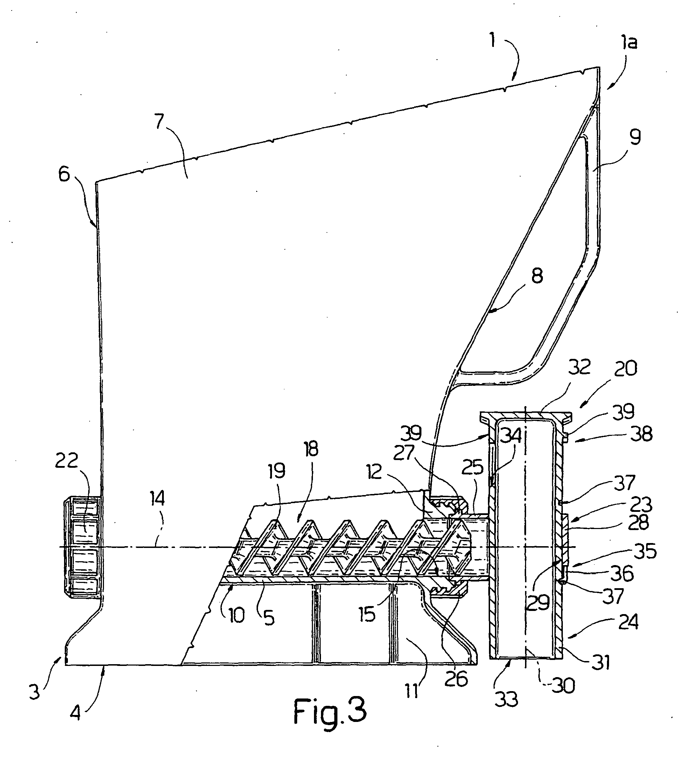

With reference to Figures 3 and 4, tank 1a has a substantially rectangular cross section, and is bounded laterally by a vertical rear wall 6, two parallel vertical major lateral walls 7 perpendicular to rear wall 6, and a front wall 8 substantially parallel to rear wall 6 and having an operator handgrip 9 by which to handle container 1 for filling and servicing purposes.

The cup-shaped base 3 defines a downward-open cavity 10 shaped internally to define, close to front wall 8, a straight runner 11 perpendicular to front and rear walls 8 and 6 and which is engaged in sliding manner by guide means (not shown) on said flat support (not shown) to position container 1 correctly on the flat support (not shown).

Just above wall 5, front wall 8 and rear wall 6 have respective externally threaded, tubular appendixes 12 and 13, which are coaxial along a horizontal axis 14 perpendicular to rear wall 6 and parallel to wall 5, project outwards of respective front and rear walls 8 and 6, and define respective conduits 15 and 16 connecting an inner cavity 17 of tank 1a to the outside.

In addition to tank 1a, container 1 also comprises a dispenser 18 which, in use, extracts metered quantities of material from cavity 17 and comprises a powered screw 19 inside cavity 17. Finally, container 1 comprises a spout 20 located outside cavity 17 and fitted to and projecting from front wall 8 of tank 1a.

Screw 19 is defined by a two-start screw coaxial with axis 14 and fitted in rotary manner to tubular appendixes 12 and 13. More specifically, at its front end, screw 19 engages conduit 15 of tubular appendix 12 in rotary manner, and is fitted integrally, at its rear end, with a cup-shaped body 21 which is coaxial with axis 14, is knurled axially inside, engages tubular appendix 13 in rotary manner to close conduit 16 in fluidtight manner, and has, on its free end, an outer annular flange located outside tubular appendix 13 and held axially contacting a free outer edge of tubular appendix 13 by a ring nut 22 screwed onto tubular appendix 13.

Cup-shaped body 21 defines a known fast-fit face coupling by which to connect screw 19 to a rotary output member (not shown) of an actuator (not shown) for powering screw 19.

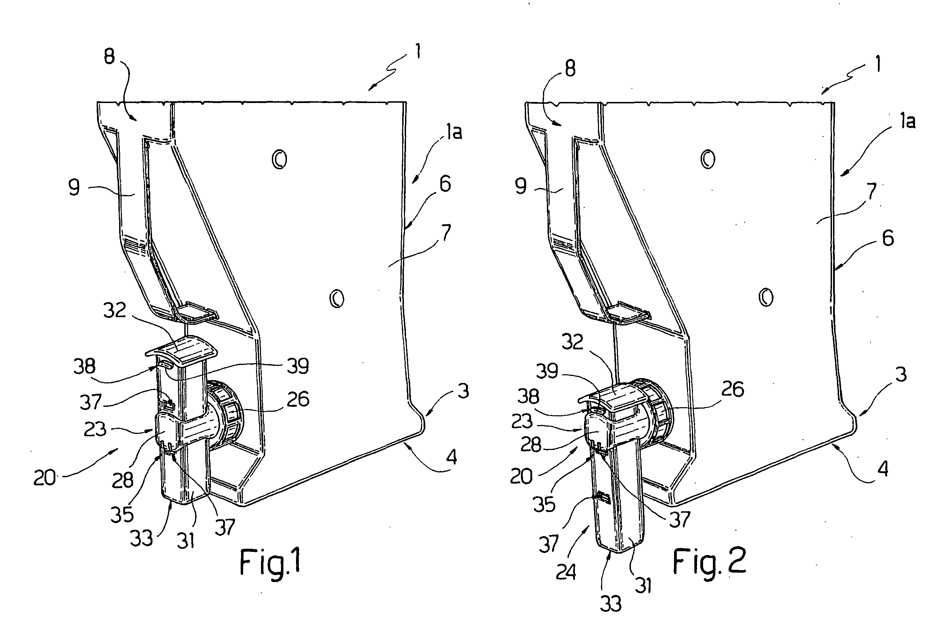

Conduit 15 of tubular appendix 12 defines an outlet conduit of tank 1a, and tubular appendix 12 defines a coupling for spout 20, which comprises a coupling body 23 for connection to tank 1a, and a dispenser body 24. Dispenser body 24 is connected to coupling body 23, and is movable, with respect to coupling body 23, between an open dispensing position (Figures 2 and 4), in which dispenser body 24 connects conduit 15 to the outside to expel the material from cavity 17 when screw 19 is activated, and a closed position (Figure 1 and 3), in which dispenser body 24 cuts off connection of conduit 15 to the outside.

Coupling body 23 comprises a sleeve 25 which supports an internally threaded ring nut 26 in rotary and axially-movable manner, has an intermediate outer flange 27 for axially locking ring nut 26, and has a free-end portion that engages conduit 15 in rotary manner, so that flange 27 contacts the free end of tubular appendix 12, to which sleeve 25 is fitted in axially-fixed and rotary manner about axis 14 by screwing ring nut 26 onto tubular appendix 12.

At the opposite end to the portion inserted inside conduit 15, sleeve 25 is fitted with an annular appendix 28 having a substantially rectangular-cross-section hole 29 with an axis 30 perpendicular to axis 14.

Dispenser body 24 comprises a tubular body 31 which extends through hole 29, coaxially with axis 30, and has a top axial end closed by a curved plate 32 coaxial with axis 14 and crosswise to axis 30.

Tubular body 31 has a material outlet opening 33 at a bottom axial end of tubular body 31; and an inlet opening 34 which is formed through the side of tubular body 31, close to plate 32 and on the side facing tank 1a, and has a flow section roughly equal to the cross section of sleeve 25.

Having a rectangular cross section similar to and roughly the same size as but no larger than that of hole 29, tubular body 31 is movable selectively, with respect to annular appendix 28 and in axially-sliding and angularly-fixed manner with respect to axis 30, into a bottom position corresponding to said open dispensing position (Figures 2 and 4), in which inlet opening 34 is coaxial with axis 14 and faces conduit 15, and a top position corresponding to said closed position (Figures 1 and 3), in which inlet opening 34 is moved upwards with respect to conduit 15, which is thus cut off from the outside by the lateral wall of tubular body 31.

Spout 20 also comprises a retaining device 35 for selectively locking dispenser body 24, with respect to coupling body 23, in the open and closed positions. Retaining device 35 comprises a tooth 36 carried by annular appendix 28; and two slots or seats 37 formed in the outer surface of tubular body 31 and into which tooth 36 clicks selectively.

Spout 20 also comprises a stop device 38 for accurately defining the open dispensing position of dispenser body 24 with respect to coupling body 23. Stop device 38 comprises two projections 39 carried by tubular body 31, close to plate 32, and which contact annular appendix 28 when tubular body 31 is pushed downwards from the closed to the open dispensing position.

As shown in Figure 3, when dispenser body 24 is in the closed position, the whole of tubular body 31 is located above edge 4 of cup-shaped base 3 of tank 1a, in a position clear of the flat support (not shown) possibly underneath, so container 1 can be moved, if necessary, with respect to the flat support (not shown) with no risk of material spillage.

In other words, in spout 20, annular appendix 28 and tubular body 31 define a yes/no tubular slide valve, in which tubular body 31 defines the tubular valve, and annular appendix 28 defines the slide; and spout 20 not only allows the material from tank 1a to be directed in any radial direction with respect to axis 14, but also serves as a tap to control outflow of the material from conduit 15.

## Claims

1. A soluble-material container for a beverage vending machine, the container (1) comprising a tank (1a) with an outlet (15); and a spout (20) fitted to the tank (1a) at the outlet (15); and being **characterized in that** the spout (20) comprises a coupling body (23) for connection to the tank (1a); and a tubular body (31) which is fitted to the coupling body (23), has an inlet opening (34) and an outlet opening (33), and is movable, with respect to the coupling body (23), to and from an open material dispensing position, in which the inlet opening (34) communicates with the outlet (15) of the tank (1a) via the coupling body (23).

2. A container as claimed in Claim 1, wherein the spout (20) is fitted to and projects from the tank (1a) at the outlet (15).

3. A container as claimed in Claim 1 or 2, wherein the inlet opening (34) is an opening formed in the side of the tubular body (31).

4. A container as claimed in one of the foregoing Claims, wherein the outlet opening (33) is an axial end opening of the tubular body (31).

5. A container as claimed in one of the foregoing Claims, wherein the outlet (15) has a first axis (14), and the tubular body (31) has a second axis (30) substantially perpendicular to the first axis (14).

6. A container as claimed in Claim 5, wherein the coupling body (23) is mounted to rotate about the first axis (14).

7. A container as claimed in Claim 5 or 6, wherein the tubular body (31) rotates with the coupling body (23) about the first axis (14).

8. A container as claimed in one of the foregoing Claims, wherein the tubular body (31) is movable axially with respect to the coupling body (23).

9. A container as claimed in one of Claims 5 to 7 and Claim 8, wherein the tubular body (31) is angularly fixed with respect to the second axis (30).

10. A container as claimed in one of the foregoing Claims, wherein the outlet (15) has a first axis (14), and the tubular body (31) has a second axis (30); the coupling body (23) comprising an annular portion (28) coaxial with the second axis (30); and the tubular body (31) extending through the annular portion (28).

11. A container as claimed in one of the foregoing Claims, wherein the inlet opening (34) is formed in the side of the tubular body (31); and the tubular body (31) is movable between the open position, in which the inlet opening (34) faces the outlet (15), and a closed position, in which a portion of the tubular body (31) faces the outlet (15) to close the outlet (15).

12. A container as claimed in Claim 11, wherein the spout (20) comprises releasable retaining means (35) interposed between the coupling body (23) and the tubular body (31) to selectively lock the tubular body (31), with respect to the coupling body (23), in the open and closed positions.

13. A container as claimed in Claim 12, wherein said retaining means (35) comprise a tooth (36) integral with the coupling body (23); and a first and second seat (37) formed in the tubular body (31), and into which the tooth (36) selectively clicks when the tubular body (31) is in the open position and the closed position respectively.

14. A container as claimed in one of the foregoing Claims, wherein stop means (38) are provided to arrest the tubular body (31) with respect to the coupling body (23) in said open position.

15. A container as claimed in one of the foregoing Claims, wherein the outlet (15) is defined by an externally threaded tubular appendix (12) extending from the tank (1a); the coupling body (23) being fitted to the tubular appendix (12), and being fixed axially with respect to the tubular appendix (12) by means of a threaded ring nut (26).

16. A container as claimed in Claim 15, and comprising a dispenser (18) housed inside the tank (1a) to extract metered quantities of material from the tank (1a) in use; and wherein the tank (1a) has a first and second tubular appendix (12, 13), of which the first (12) defines the outlet (15), and the second (13) is coaxial with the first (12) and with the coupling body (23); the first and second tubular appendix (12, 13) supporting the dispenser (18).

17. A container as claimed in Claim 16, wherein the dispenser comprises a powered screw (19) supported in rotary manner by the first and second tubular appendix (12, 13).

18. A container as claimed in Claim 17, wherein the screw (19) is defined by a two-start screw.

19. A container as claimed in Claim 17 or 18, wherein the screw (19) is fitted integrally at one end with fast-fit connecting means (21) for its own connection to rotary actuating means.

## Patentansprüche

1. Behälter für lösliches Material für eine Getränkeverkaufsmaschine, wobei der Behälter (1) einen Tank (1a) mit einem Auslass (15) umfasst; sowie ein Ausflusselement (20), das an dem Auslass (15) an dem Tank (1a) befestigt ist; und der **dadurch gekennzeichnet ist, dass** das Ausflusselement (20) einen Kupplungskörper (23) zum Zweck der Verbindung mit dem Tank (1a) umfasst; sowie einen röhrenförmigen Körper (31), welcher an dem Kupplungskörper (23) befestigt ist, eine Einlassöffnung und (34) und eine Auslassöffnung (33) aufweist und in Bezug auf den Kupplungskörper (23) hin zu einer und fort von einer offenen Materialspendestellung beweglich ist, in welcher die Einlassöffnung (34) über den Kupplungskörper (23) mit dem Auslass (15) des Tanks (1a) in Verbindung ist.

2. Behälter gemäß Anspruch 1, wobei das Ausflusselement (20) an dem Tank (1a) befestigt ist und an dem Auslass (15) von diesem hervorsteht.

3. Behälter gemäß Anspruch 1 oder 2, wobei die Einlassöffnung (34) eine in der Seite des röhrenförmigen Körpers (31) ausgebildete Öffnung ist.

4. Behälter gemäß einem der vorhergehenden Ansprüche, wobei die Auslassöffnung (33) eine axiale Endöffnung des röhrenförmigen Körpers (31) ist.

5. Behälter gemäß einem der vorhergehenden Ansprüche, wobei der Auslass (15) eine erste Achse (14) aufweist und der röhrenförmige Körper (31) eine zweite, im wesentlichen zu der ersten Achse (14) senkrechte Achse (30) aufweist.

6. Behälter gemäß Anspruch 5, wobei der Kupplungskörper (23) um die erste Achse herum drehbar gelagert ist.

7. Behälter gemäß Anspruch 5 oder 6, wobei der röhrenförmige Körper (31) sich mit dem Kupplungskörper (23) um die erste Achse (14) herum dreht.

8. Behälter gemäß einem der vorhergehenden Ansprüche, wobei der röhrenförmige Körper (31) in Bezug auf den Kupplungskörper (23) axial bewegbar ist.

9. Behälter gemäß einem der Ansprüche 5 bis 7 und Anspruch 8, wobei der röhrenförmige Körper (31) in Bezug auf die zweite Achse (30) drehfest ist.

10. Behälter gemäß einem der vorhergehenden Ansprüche, wobei der Auslass (15) eine erste Achse (14) aufweist und der röhrenförmige Körper (31) eine zweite Achse (30) aufweist; wobei der Kupplungskörper (23) einen zu der zweiten Achse (30) koaxialen ringförmigen Abschnitt (28) umfasst; und der röhrenförmige Körper (31) sich durch den ringförmigen Abschnitt (28) hindurch erstreckt.

11. Behälter gemäß einem der vorhergehenden Ansprüche, wobei die Einlassöffnung (34) in der Seite des röhrenförmigen Körpers (31) ausgebildet ist; und der röhrenförmige Körper (31) zwischen der offenen Stellung, in welcher die Einlassöffnung (34) dem Auslass (34) zugewandt ist, und einer geschlossenen Stellung, in welcher ein Abschnitt des röhrenförmigen Körpers (31) dem Auslass (15) zugewandt ist, um den Auslass (15) zu schließen, beweglich ist.

12. Behälter gemäß Anspruch 11, wobei das Ausflusselement (20) zwischen dem Kupplungskörper (23) und dem röhrenförmigen Körper (31) eingeschaltete lösbare Haltemittel (35) umfasst, um den röhrenförmigen Körper (31) in Bezug auf den Kupplungskörper (23) gezielt in der offenen und der geschlossenen Stellung zu verriegeln.

13. Behälter gemäß Anspruch 12, wobei die Haltemittel (35) einen mit dem Kupplungskörper (23) einstückigen Zahn (36) umfassen; sowie einen in dem röhrenförmigen Körper (31) ausgebildeten ersten und zweiten Sitz (37), in welchen der Zahn (36) gezielt einrastet, wenn der röhrenförmige Körper (31) in seiner offenen Stellung beziehungsweise der geschlossenen Stellung ist.

14. Behälter gemäß einem der vorhergehenden Ansprüche, wobei Anschlagmittel (38) bereitgestellt sind, um den röhrenförmigen Körper (31) in Bezug auf den Kupplungskörper (23) in der offenen Stellung zu arretieren.

15. Behälter gemäß einem der vorhergehenden Ansprüche, wobei der Auslass (15) durch einen sich von dem Tank (1a) erstreckenden, mit Außengewinde versehenen röhrenförmigen Fortsatz (12) definiert ist; der Kupplungskörper (23) an dem röhrenförmigen Fortsatz (12) angebracht ist, und mittels einer mit Gewinde versehenen Ringmutter (26) in Bezug auf den röhrenförmigen Fortsatz (12) axial festgestellt ist.

16. Behälter gemäß Anspruch 15, umfassend einen innerhalb des Tanks (1a) untergebrachten Spender (18), um beim Gebrauch dosierte Mengen von Material aus dem Tank (1a) heraus zu nehmen; wobei der Tank (1a) einen ersten und einen zweiten röhrenförmigen Fortsatz (12, 13) aufweist, deren erster (12) den Auslass (15) definiert, und deren zweiter (13) koaxial mit dem ersten (12) und mit dem Kupplungskörper (23) ist; wobei der erste und der zweite röhrenförmige Ansatz (12, 13) den Spender (18) tragen.

17. Behälter gemäß Anspruch 16, wobei der Spender eine angetriebene Schraube (19) umfasst, die in drehbarer Weise von dem ersten und dem zweiten röhrenförmigen Fortsatz (12, 13) getragen wird.

18. Behälter gemäß Anspruch 17, wobei die Schraube (19) durch eine doppelgängige Schraube definiert wird.

19. Behälter gemäß Anspruch 17 oder 18, wobei die Schraube (19) an einem Ende einstückig mit Schnellverbindungsmitteln (21) für ihre eigene Verbindung mit Drehbetätigungsmitteln versehen ist.

## Revendications

1. Conteneur de matériau soluble pour un distributeur de boissons, le conteneur (1) comprenant un réservoir (1a) muni d'un orifice de sortie (15) ; et un bec verseur (20) monté sur le réservoir (1a) au niveau de l'orifice de sortie (15) ; et étant **caractérisé en ce que** le bec verseur (20) comprend un corps de raccordement (23) pour un raccordement au réservoir (1a) ; et un corps tubulaire (31) qui est monté sur le corps de raccordement (23), comporte une ouverture d'orifice d'entrée (34) et une ouverture d'orifice de sortie (33), et peut se déplacer, par rapport au corps de raccordement (23), vers et à partir d'une position de distribution de matériau ouverte dans laquelle l'ouverture de l'orifice d'entrée (34) communique avec l'orifice de sortie (15) du réservoir (1a) via le corps de raccordement (23).

2. Conteneur selon la revendication 1, dans lequel le bec verseur (20) est monté sur et se projette en saillie à partir du réservoir (1a) au niveau de l'orifice de sortie (15).

3. Conteneur selon la revendication 1 ou 2, dans lequel l'ouverture de l'orifice d'entrée (34) est une ouverture formée dans le côté du corps tubulaire (31).

4. Conteneur selon l'une quelconque des revendications précédentes, dans lequel l'ouverture de l'orifice de sortie (33) est une ouverture d'extrémité axiale du corps tubulaire (31).

5. Conteneur selon l'une quelconque des revendications précédentes, dans lequel l'orifice de sortie (15) comprend un premier axe (14), et le corps tubulaire (31) comprend un second axe (30) qui est sensiblement perpendiculaire au premier axe (14).

6. Conteneur selon la revendication 5, dans lequel le corps de raccordement (23) est monté de sorte à tourner autour du premier axe (14).

7. Conteneur selon la revendication 5 ou 6, dans lequel le corps tubulaire (31) tourne conjointement avec le corps de raccordement (23) autour du premier axe (14).

8. Conteneur selon l'une quelconque des revendications précédentes, dans lequel le corps tubulaire (31) peut se déplacer axialement par rapport au corps de raccordement (23).

9. Conteneur selon l'une quelconque des revendications 5 à 7 et selon la revendication 8, dans lequel le corps tubulaire (31) est fixé à angle droit par rapport au second axe (30).

10. Conteneur selon l'une quelconque des revendications précédentes, dans lequel l'orifice de sortie (15) comprend un premier axe (14), et le corps tubulaire (31) comprend un second axe (30) ; le corps de raccordement (23) comprend une partie annulaire (28) qui est coaxiale avec le second axe (30) ; et le corps tubulaire (31) s'étend à travers la partie annulaire (28).

11. Conteneur selon l'une quelconque des revendications précédentes, dans lequel l'ouverture de l'orifice d'entrée (34) est formée dans le côté du corps tubulaire (31) ; et le corps tubulaire (31) peut se déplacer entre la position ouverte dans laquelle l'ouverture de l'orifice d'entrée (34) fait face à l'orifice de sortie (15), et une position fermée dans laquelle une partie du corps tubulaire (31) fait face à l'orifice de sortie (15) de sorte à fermer l'orifice de sortie (15).

12. Conteneur selon la revendication 11, dans lequel le bec verseur (20) comprend des moyens de retenue rétractables (35) intercalés entre le corps de raccordement (23) et le corps tubulaire (31) de sorte à bloquer sélectivement le corps tubulaire (31) par rapport au corps de raccordement (23), dans les positions ouverte et fermée.

13. Conteneur selon la revendication 12, dans lequel lesdits moyens de retenue (35) comprennent une dent (36) formée d'un seul tenant avec le corps de raccordement (23) ; et des premier et second sièges (37) formés dans le corps tubulaire (31), et à l'intérieur desquels la dent (36) se bloque sélectivement lorsque le corps tubulaire (31) est dans la position ouverte et dans la position fermée, respectivement.

14. Conteneur selon l'une quelconque des revendications précédentes, dans lequel des moyens d'arrêt (38) sont prévus pour arrêter le corps tubulaire (31) par rapport au corps de raccordement (23) dans ladite position ouverte.

15. Conteneur selon l'une quelconque des revendications précédentes, dans lequel l'orifice de sortie (15) est défini par un appendice tubulaire à filetage extérieur (12) s'étendant à partir du réservoir (1a) ; le corps de raccordement (23) étant raccordé à l'appendice tubulaire (12), et étant axialement fixé par rapport à l'appendice tubulaire (12) au moyen d'un écrou à oeil fileté (26).

16. Conteneur selon la revendication 15, comprenant un dispositif de distribution (18) logé à l'intérieur du réservoir (1a) de sorte à extraire, à l'utilisation, des quantités mesurées de matériau du réservoir (1a) ; et dans lequel le réservoir (1a) comporte des premier et second appendices tubulaires (12, 13), dont le premier (12) définit l'orifice de sortie (15), et le second (13) est coaxial avec le premier (12) et avec le corps de raccordement (23) ; les premier et second appendices tubulaires (12, 13) supportant le dispositif de distribution (18).

17. Conteneur selon la revendication 16, dans lequel le dispositif de distribution comprend une vis à commande électrique (19) supportée de façon rotative par les premier et second appendices tubulaires (12, 13).

18. Conteneur selon la revendication 17, dans lequel la vis (19) est définie par un vis à double pas.

19. Conteneur selon la revendication 17 ou 18, dans lequel la vis (19) comprend, montés d'un seul tenant à l'une de ses extrémités, des moyens de raccordement rapide (21) pour son propre raccordement à des moyens de commande en rotation.
